# DEMANDE DE BREVET EUROPEEN

(11) **EP 2 402 619 A1**
(43) Date de publication de la demande: **04.01.2012**
(21) Numéro de dépôt: 11171795.5
(22) Date de dépôt: 28.06.2011
(51) Int. Cl.: F16B 7/14, F16M 13/02, F16M 11/10, F16M 11/24

(54) **Dispositif de maintien en position réglable le long d'un mât et orientable autour de l'axe du mât**

(30) Priorité: 29.06.2010 FR 1055255
(71) Demandeur: ID- Industrie + Design, 94420 Le Plessis Trevise (FR)
(72) Inventeur: Rudolf, Alain, 94100 Saint Maur des Fosses (FR)
(74) Mandataire: Hirsch, Marc-Roger

(57) **Abrégé**

L'invention se rapporte à un dispositif de maintien en position réglable le long d'un mât et orientable par pivotement lorsque le dispositif (20) est maintenu en position le long au mât, comprenant : un sous-ensemble de fixation sur le mât comportant un frein (26) pour le maintien en position du dispositif (20) par frottement en adhérence du frein (26) sur le mât et un organe de serrage (32) du frein (26) en adhérence sur le mât ; au moins un sous-ensemble orientable par pivotement lorsque le dispositif de maintien (20) est maintenu par frottement en adhérence du frein (26) sur le mât ; le sous-ensemble orientable étant monté pivotant par rapport au sous-ensemble de fixation et comprenant un mécanisme (40) de desserrage de l'organe de serrage (32) du frein (26).

L'invention permet un réglage facilité de la position et de l'orientation par rapport au mât.

## Description

L'invention se rapporte à un dispositif de maintien en position réglable le long d'un mât et orientable par pivotement autour de l'axe du mât. L'invention se rapporte aussi à un support pour le maintien en position réglable le long d'un mât et pour l'orientation d'une charge par rapport à ce mât.

Dans le domaine technique général du mobilier de bureau, chaque utilisateur d'un ensemble de mobilier de bureau souhaite généralement que les différents éléments de mobilier possèdent une disposition réglable. De cette manière la disposition des différents éléments de bureau peut être adaptée à l'utilisateur pour améliorer son ergonomie. Des systèmes connus de mobilier de bureau dont la disposition est réglable proposent le maintien en position de divers éléments de bureau sur un mât ou sur un ensemble de mâts, généralement verticaux. Le mobilier de bureau constitue alors une charge qui doit être supportée par le système de mâts par l'intermédiaire d'un dispositif de maintien sur un mât.

Dans le domaine technique des dispositifs de maintien sur un mât, il est connu d'utiliser des mâts lisses permettant de maintenir le dispositif à n'importe quelle position le long du mât. Le maintien en position du dispositif est classiquement réalisé par serrage du dispositif sur le mât. Le dispositif étant maintenu par serrage sur le mât, le dispositif une fois en position ne peut pas pivoter autour de l'axe du mât, ainsi le maintien de la charge dans une position voulue autour du mât impose une orientation fixe du dispositif autour du mât. L'emplacement de la charge peut alors rendre l'accès au dispositif de maintien difficile pour l'utilisateur qui souhaite modifier la position de la charge le long du mât. Un tel dispositif de maintien limite l'adaptation par l'utilisateur de la position et de l'orientation par rapport au mât de la charge portée par ce dispositif.

Il existe donc un besoin pour un dispositif de maintien avec un réglage facilité de la position et de l'orientation par rapport au mât.

Pour cela, l'invention propose un dispositif de maintien en position réglable le long d'un mât et orientable par pivotement autour de l'axe du mât lorsque le dispositif est maintenu en position le long au mât, comprenant :
un sous-ensemble de fixation sur le mât comportant un frein pour le maintien en position du dispositif le long du mât par frottement en adhérence du frein sur le mât et un organe de serrage du frein en adhérence sur le mât ;
au moins un sous-ensemble orientable par pivotement autour de l'axe du mât lorsque le dispositif de maintien est maintenu en position le long du mât par frottement en adhérence du frein sur le mât ; le sous-ensemble orientable étant monté pivotant par rapport au sous-ensemble de fixation et comprenant un mécanisme de desserrage de l'organe de serrage du frein sur le mât pour le réglage de la position du dispositif le long du mât.

Selon une variante, l'organe de serrage est susceptible de venir en contact avec le frein pour serrer le frein en adhérence sur le mât, le mécanisme de desserrage s'étendant entre l'organe de serrage et le frein pour que l'actionnement du mécanisme de desserrage diminue la sollicitation de l'organe de serrage sur le frein.

Selon une variante, le mécanisme de desserrage comprend une première portion en contact avec le frein et une deuxième portion en contact avec l'organe de serrage, la première portion étant articulée en rotation par rapport à la deuxième portion pour diminuer la sollicitation de l'organe de serrage sur le frein, le mécanisme de desserrage étant de préférence actionné par un effort radial par rapport à la direction d'extension du mât.

Selon une variante, l'organe de serrage est précontraint en serrage du frein en adhérence sur le mât, le mécanisme de desserrage étant prévu pour que l'actionnement du mécanisme de desserrage s'oppose à la précontrainte en serrage du frein.

Selon une variante, le dispositif comporte une partie élastique telle qu'un ressort de compression pour réaliser la précontrainte en serrage de l'organe de serrage.

Selon une variante, le dispositif comporte une partie plus rigide que la partie élastique, la partie plus rigide formant boîtier duquel émerge au moins en partie le mécanisme de desserrage pour permettre l'actionnement manuel du mécanisme de puis l'extérieur du boîtier et le boîtier maintenant la partie élastique en déformation géométrique pour précontraindre en serrage l'organe de serrage.

Selon une variante, le mécanisme de desserrage est à actionnement manuel, de préférence à l'aide d'une seule main.

Selon une variante :
le frein est une douille élastique fendue destinée à être traversée par le mât, la douille élastique comportant une zone formant mors susceptible d'adhérer au mât par frottement, et
l'organe de serrage est une portion de cône creux, tronqué logeant la zone formant mors du frein pour serrer le frein sur le mât par l'organe de serrage, par coopération de formes entre la portion de cône et la zone formant mors.

Selon une variante, le dispositif comprend un moyeu monté pivotant par rapport au sous ensemble de fixation, le moyeu étant orientable par pivotement autour de l'axe du mât lorsque le dispositif est maintenu en position le long du mât.

Selon une variante, le moyeu forme boîtier du dispositif duquel émerge au moins en partie le mécanisme de desserrage pour permettre l'actionnement manuel du mécanisme depuis l'extérieur du boîtier.

L'invention propose en outre un support pour le maintien en position réglable le long d'un mât et l'orientation d'une charge par rapport à ce mât, le support comportant :
le dispositif de maintien précédent en position le long du mât, et
un portant solidaire du moyeu du dispositif de maintien, le portant étant destiné à porter la charge.

Selon une variante, le portant est un bras articulé.

Selon une variante, la charge que le portant est destiné à porter est du mobilier de bureau, de préférence un écran d'affichage pour ordinateur.

L'invention propose encore un ensemble prêt à monter ou assemblé, comprenant :
un mât ; et
le support précédent ou le dispositif de maintien précédent, le dispositif de maintien étant destiné à être maintenu en position le long du mât par frottement en adhérence du frein sur le mât.

Selon une variante, le diamètre du mât est constant.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, une vue en coupe d'un mode de réalisation du dispositif de maintien positionné sur un mât ;
- figure 2, une vue éclatée du dispositif de maintien selon un autre mode de réalisation du dispositif de maintien ;
- figure 3, une vue en perspective de l'ensemble formé d'un mât et du support proposé portant un écran d'ordinateur.

L'invention se rapporte à un dispositif de maintien en position réglable le long d'un mât et orientable par pivotement autour de l'axe du mât lorsque le dispositif est maintenu en position le long du mât.

Le dispositif comprend un sous-ensemble de fixation sur le mât. Ce sous ensemble comporte un frein et un organe de serrage du frein sur le mât. L'actionnement de l'organe de serrage permet le serrage du frein sur le mât. Les efforts de serrage du frein sur le mât entraînent un frottement du frein en adhérence sur le mât. De par l'adhérence du frein sur le mât, le dispositif de maintien est maintenu en position le long du mât.

Le dispositif comprend en outre un autre sous-ensemble monté pivotant par rapport au sous ensemble de fixation. Le montage pivotant par rapport au sous ensemble de fixation permet à l'autre sous-ensemble d'être orientable autour de l'axe du mât lorsque le dispositif de fixation est maintenu en position le long du mât par frottement en adhérence du frein sur le mât. L'orientation autour de l'axe du mât correspond à la faculté de pivotement autour de l'axe du mât.

Ce sous ensemble orientable comprend un mécanisme de desserrage de l'organe de serrage. L'actionnement du mécanisme de desserrage, desserre le serrage de l'organe de serrage sur le frein. Les efforts de serrage du frein sur le mât ne sont alors plus suffisant pour imposer un frottement par adhérence, le frottement devient alors un frottement par glissement. Le frein peut alors glisser sur le mât ce qui autorise le réglage de la position du dispositif de maintien le long du mât, permettant l'adaptation de la position du dispositif d'être adaptée par rapport à un utilisateur.

Le mécanisme de desserrage de l'organe de serrage du dispositif de maintien étant compris dans le sous ensemble orientable, le mécanisme de desserrage est orientable autour de l'axe du mât. Ainsi lors de l'utilisation du dispositif pour le portage d'une charge, l'orientation possible du mécanisme de desserrage permet d'éviter que l'utilisateur du dispositif ne soit gêné par la charge portée lorsque l'utilisateur souhaite adapter la position du dispositif le long du mât.

Le dispositif proposé permet donc un réglage facilité de la position et de l'orientation par rapport au mât.

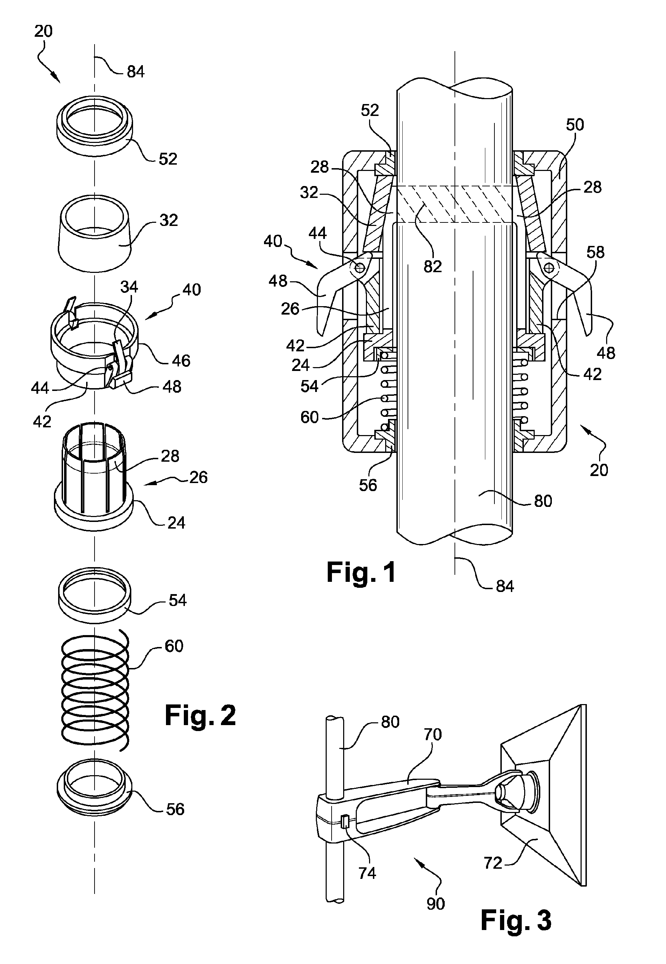

La figure 1 montre une vue en coupe d'un premier mode de réalisation du dispositif de maintien 20. Dans la configuration de la figure 1, le dispositif de maintien 20 est maintenu en position sur le mât 80. Le mât 80 présente une symétrie de révolution autour de son axe 84 et le dispositif de maintien 20 s'étend autour du mât 80. Le dispositif de maintien 20 représenté en figure 1 est symétrique par rapport à l'axe 84 du mât 80.

Le frein 26 du dispositif de maintien 20 présente une zone formant mors 28. Ces mors 28 sont au contact du mât 80. La zone du mât en contact avec les mors 28 réalise la fonction d'une zone de fixation 82 du dispositif 20 sur le mât 80. Les mors 28 du frein 26 sont serrés sur le mât 80 par l'organe de serrage 32. En effet dans la configuration illustrée par la figure 1, l'organe de serrage 32 est au contact du frein 26 au niveau de la zone du frein 26 formant mors 28 pour serrer les mors 28 sur le mât 80. Ainsi le frein 26 frotte en adhérence sur le mât 80, ce qui permet au sous-ensemble comprenant le frein 26 et l'organe de serrage 32 de maintenir ou bloquer le dispositif 20 à une position le long du mât 80.

Le frein 26 comporte un épaulement 24. Cet épaulement 24 permet de disposer le mécanisme de desserrage 40 de manière à ce qu'il s'étende entre l'organe de serrage 32 et le frein 26. Le mécanisme de déserrage 40 comporte une première portion 42 en contact avec le frein 26 et une deuxième portion 48 en contact avec l'organe de serrage 32. La première portion 42 et la deuxième portion 48 peuvent être articulées en rotation l'une par rapport à l'autre autour d'un axe 44.

Conformément à la figure 1, la deuxième portion 48 comporte de préférence un levier articulé autour de l'axe 44. Ce levier présente dans la partie périphérique de la figure une extrémité pour l'actionnement du mécanisme par un utilisateur, par exemple pour l'actionnement manuel du mécanisme par l'utilisateur. La figure 1 illustre que la deuxième portion 48 comporte deux leviers articulés en rotation par rapport à la première portion 42, les deux leviers étant disposés de part et d'autre de l'axe 84 du mât 80. Selon un mode de réalisation préféré, l'axe 44 d'articulation s'étend dans une direction orthoradiale autour du mât 80. Cette orientation de l'axe 44 permet l'obtention d'un levier qui peut être actionné dans une direction radiale par rapport à la direction d'extension du mât 80. Un tel mode de réalisation peut être illustré par la figure 1, où les deux leviers formés par la deuxième portion 48 sont formés pour être actionnés par l'utilisateur dans une direction radiale. La rotation autour des axes 44 transforme l'actionnement radial de l'utilisateur en un écartement axial de l'organe de serrage 32 par rapport au le frein 26.

La réalisation d'un mécanisme de desserrage présentant un actionnement par des efforts radiaux assure que le desserrage peut être obtenue à l'aide d'une seule main par l'utilisateur. Un tel actionnement à l'aide d'une seule main est particulièrement facilité lorsque les efforts radiaux sont à fournir selon un même diamètre autour du mât 80. Le mode de réalisation du dispositif avec les deux leviers de la figure 1 correspond à un tel actionnement facilité.

La figure 2 montre une vue éclatée du dispositif de maintien selon un autre mode de réalisation du dispositif de maintien 20. Ce deuxième mode de réalisation est basé sur le premier mode de réalisation décrit en relation avec la figure 1, seule la réalisation du mécanisme de desserrage 40 est différente. En effet la première portion 42 comporte une section supérieure 46 à l'intérieur de laquelle vient se loger l'organe de serrage 32. Par ailleurs dans cet autre mode de réalisation la deuxième portion 48 comporte une languette élastique 34 destinée à venir en contact avec l'organe de serrage 32 une fois logé à l'intérieur de la section supérieure 46.

La suite de la description s'applique aux deux modes de réalisation précédemment présentés sauf mentions explicitement contraires.

L'organe de serrage 32 peut être une portion de cône creux ou manchon de cône creux. Le cône creux est alors tronqué pour permettre le passage du mât à l'intérieur. Le frein 26 peut être une douille élastique fendue dont une zone supérieure forme les mors 28. Les mors 28 de la douille élastique sont prévus pour être logés à l'intérieur du cône creux, de sorte que la portion de cône creux soit susceptible de venir en contact avec les mors 28 pour permettre le serrage du frein 26 sur le mât 80.

La première portion 42 et la deuxième portion 48 du mécanisme de desserrage 40 frottent par glissement sur le frein 26 et sur l'organe de serrage 32. De cette manière, le mécanisme de desserrage 40 peut pivoter par rapport au sous-ensemble de fixation comprenant le frein 26 et l'organe de serrage 32. Par conséquent le mécanisme de desserrage 40 à la possibilité de pivoter autour de l'axe 84 du mât 80. Le mécanisme de desserrage 40 constitue ainsi un premier sous ensemble orientable par pivotement autour de l'axe 84 du mât 80.

Le dispositif de maintien 20 peut comprendre des bagues de friction 52 et 54 autorisant le pivotement d'un sous-ensemble orientable supplémentaire monté sur le sous-ensemble de fixation. Les bagues de friction 52 et 54 forment alors des pivots. Selon la figure 1, la bague 52 est montée sur l'organe de serrage 32 alors que le frein 26 est monté sur la bague 54.

Ce sous-ensemble orientable supplémentaire comprend un boîtier 50 (non représenté en figure 2) monté sur la bague 52 et un ressort 60 au contact de la bague 54. Le boîtier 50 et le ressort 60 peuvent interagir l'un avec l'autre par l'intermédiaire d'une bague de friction inférieure 56, formant pivot. Chaque contact des bagues 52, 54 et 56 avec une autre pièce du dispositif peut permettre le pivotement de ladite pièce relativement à la bague. Ainsi le sous-ensemble orientable supplémentaire peut alternativement être formé par :
- le boîtier 50 pivotant par rapport aux bagues 52 et 56 ;
- le boîtier 50 et les bagues 52 et 56 pivotant par rapport au ressort 60 et à l'organe de serrage 32 ;
- le boîtier 50, la bague 56 et le ressort 60 pivotant par rapport aux bagues 54 et 52 ;
- le boîtier 50, les bagues 52, 56 et le ressort 60 pivotant par rapport à la bague 54 et à l'organe de serrage 32 ;
- le boîtier 50, les bagues 54, 56 et le ressort 60 pivotant par rapport à la bague 52 et par rapport au frein 26 ;
- le boîtier 50, les bagues 52, 54, 56 et le ressort 60 pivotant par rapport à l'organe de serrage 32 et au frein 26.

La disposition de bagues de friction 54 et 56 en contact avec les extrémités inférieures et supérieures du ressort 60 permet de limiter l'usure des pièces constituant le dispositif 20 qui résulterait du parcours des extrémités du ressort 60 autour de l'axe 84 du mât 80 lors du pivotement du ressort 60.

Dans un mode de réalisation préféré, les bagues 52 et 56 présentent un jeu radial avec le mât 80 lors de la disposition du dispositif autour du mât 80. Les bagues 52 et 56 réalisent alors une fonction de paliers par rapport au mât 80, autorisant la rotation du sous ensemble orientable supplémentaire autour du mât 80.

Le boîtier 50 peut présenter des fenêtres 58 (non illustrées en figure 2) à travers lesquelles la deuxième portion 48 du mécanisme de desserrage 40 émerge en partie du boîtier 50. La partie émergeante du mécanisme 40 permet l'actionnement du mécanisme de desserrage 40 depuis l'extérieur du boîtier 50, ce qui facilite l'actionnement manuel du mécanisme 40.

Le sous ensemble orientable supplémentaire peut réaliser une fonction de précontrainte de l'organe de serrage 32 en serrage du frein 26 en adhérence, fonction qui sera plus largement décrite par la suite avec la description du fonctionnement du dispositif 20.

Par ailleurs le sous ensemble orientable supplémentaire peut former un moyeu autour de l'axe 84 du mât 80 indépendamment de la fonction de précontrainte. Le moyeu est alors monté pivotant par rapport au sous ensemble de fixation. Ce moyeu est destiné à l'orientation d'une charge supportée par le mât 80 par l'intermédiaire du dispositif de maintien 20.

Ainsi l'invention se rapporte aussi à un support pour le maintien en position réglable le long du mât 80 et pour l'orientation d'une charge par rapport au mât 80. Le support proposé comprend le dispositif de maintien 20 avec le sous ensemble orientable supplémentaire formant moyeu. Le support comprend en outre un portant solidaire du moyeu, le portant étant destiné à porter la charge. Le sous-ensemble orientable en forme de moyeu permet l'orientation autour de l'axe 84 de la charge porté par le portant du support proposé.

Le mât 80 et le support proposé forme un ensemble 90 représenté en perspective par la figure 3. Le support proposé peut être utilisé pour porter une charge 72 tel que du mobilier de bureau. La figure 3 illustre ainsi que la charge 72 portée par le portant du support peut être un écran d'affichage pour ordinateur. Toujours en référence à la figure 3, il est préféré que le portant soit un bras articulé 70 pour permettre une plus grande liberté d'ajustement de la charge portée en fonction des souhaits de l'utilisateur. Des boutons 74 d'actionnement du mécanisme de desserrage 40 peuvent émergés de part et d'autre du bras articulé, ces boutons d'actionnement 74 sont associés aux leviers 48 pour permettre l'actionnement manuel par l'utilisateur du mécanisme de desserrage 40. Dans un mode de réalisation simplifié du support, le portant est venu de matière avec le boîtier 50 et les boutons d'actionnements 74 sont formés par les leviers 48. Selon ce mode de réalisation, le boîtier 50 et le portant peuvent être formés par l'assemblage d'une coque inférieure et d'une coque supérieure, le boîtier 50 étant alors une partie du bras articulé 70.

La suite de la description présente le fonctionnement du dispositif de maintien 20 dans le cas où il existe une précontrainte de l'organe de serrage 32 en serrage, sauf mentions explicitement contraires.

Le ressort 60 en tant que partie élastique impose la mise en contact de l'organe de serrage 32 avec le frein 26. En effet le ressort 60 est monté comprimé entre les bagues 54 et 56. Le ressort 60 sollicite alors les bagues 54 et 56 en écartement. Le boîtier 50, en tant que partie plus rigide que la partie élastique, reprend la sollicitation de la bague 56 et la transmet à la bague 52. Ceci impose une sollicitation des bagues 52 et 54 en rapprochement l'un vers l'autre. Les bagues 52 et 54 compriment alors l'organe de serrage 32 et le frein 26 l'un contre l'autre. De par cette compression et de par la coopération de formes du frein 26, ou plus précisément des mors 28 du frein avec le cône 32, l'effort de compression orienté dans l'axe du mât 80 est transformé en effort de compression orienté radialement par rapport à l'axe du mât 80. De par cet effort de compression radial, les mors du frein frottent en adhérence sur la zone 82 du mât 80 permettant le maintien en position du dispositif 20 le long du mât 80. En d'autres termes, la partie plus rigide maintient la partie élastique en déformation géométrique pour précontraindre en serrage l'organe de serrage 32. Ainsi en l'absence d'actionnement du dispositif 20 par l'utilisateur, le dispositif de maintien 20 est automatiquement maintenu en position le long du mât 80.

La précontrainte de l'organe de serrage 32 n'est pas indispensable au maintien en position du dispositif 20 sur le mât 80, le dispositif de fixation 20 pouvant être maintenu sur le mât par l'action du poids de la charge 72 portée par le support proposé. En effet, dans le cas où le mât 80 s'étend verticalement, le poids de la charge 72 peut être transmis à l'organe de serrage 32 par l'intermédiaire de la portion haute du boîtier 50. La réalisation en forme de cône de l'organe de serrage transforme alors le poids vertical de la charge 72 en un effort radial de serrage du frein 26 sur le mât 80. L'augmentation du poids de la charge augmente l'effort de serrage du frein 26 sur le mât 80, améliorant ainsi le maintien en position du dispositif 20. Cet effet du poids de la charge 72 peut être utilisé de façon indépendante ou complémentaire au ressort de compression 60.

L'actionnement du mécanisme de desserrage 40 par un utilisateur via la rotation de la deuxième portion 48 autour de l'axe 44 entraîne la sollicitation vers le haut de l'organe de serrage 32 et la sollicitation vers le bas du frein 26. L'actionnement par l'utilisateur du mécanisme de desserrage 40 s'oppose alors à la précontrainte en serrage, éventuellement au poids de la charge 72, et tend à diminuer la sollicitation de l'organe de serrage 32 sur le frein 26. Lorsque la sollicitation de l'organe de serrage 32 est sur le frein 26 est diminuée, les mors 28 ne sont plus serrés sur le mât, le frein 26 peut donc frotter en glissement sur le mât autorisant l'adaptation de la position du dispositif 20 le long du mât 80. Le dispositif de maintien 20 proposé permet ainsi un réglage de la position du dispositif de maintien 20 sur le mât 80 par une simple pression de la deuxième portion 48 du mécanisme de desserrage 40. Le réglage du dispositif 20 en position sur le mât 80 est simplifié.

La réalisation de la deuxième portion 48 à l'aide de levier permet de réaliser un "effet de levier" démultipliant ainsi la force fournie par l'utilisateur pour s'opposer à la précontrainte de l'organe de serrage 32 en serrage du frein 26, ou au poids de la charge 72. La force que doit fournir l'utilisateur pour le réglage du dispositif 20 en position est alors faible comparativement à l'effort de serrage du frein 26 sur le mât 80. L'adaptation par l'utilisateur du dispositif 20 en position sur le mât 80 est facilitée. De plus, la démultiplication de la force fournie par l'utilisateur permet un dosage du desserrage du frein autorisant un réglage en hauteur très précis le long du mât du dispositif proposé. La précision du réglage est particulièrement utile lorsque la charge 72 fait partie d'un ensemble plus vaste de charges indépendamment suspendues, telle qu'un écran d'affichage d'ordinateur faisant partie d'un mur d'écrans d'affichage. La précision du réglage est par ailleurs améliorée dans le cas où le desserrage du dispositif peut être actionnée à l'aide d'une seule main de l'utilisateur. Le desserrage du dispositif de maintien étant possible avec une seule main de l'utilisateur, l'autre main de l'utilisateur peut avantageusement, au moment où le dispositif n'est plus fixé au mât, soutenir la charge 72 supportée par le dispositif. Ce mode de réalisation correspond notamment au dispositif illustré en figure 3, où les boutons 74 ; de part et d'autre du mât 80 ; peuvent être actionnés par des efforts radiaux avec une seule main de l'utilisateur.

Selon le mode de réalisation illustré par la figure 2, la section supérieure 46 limite le débattement radial du cône de serrage 32 lorsque l'effort de serrage du cône 32 est diminué par l'actionnement de la deuxième portion 48 du mécanisme de desserrage par l'utilisateur ou lorsqu'il est sollicité en serrage du frein 26. Toujours selon le mode de réalisation de la figure 2, la languette élastique 34 vient en contact avec l'organe de serrage 32. La languette 34 s'oppose à la rotation dans le sens inverse du sens de l'actionnement de la deuxième portion 48 en desserrage. La languette 34 contrôle la position de la deuxième portion 48 par rapport à la première portion 44 et par rapport au cône de serrage 32 en maintenant par exemple le levier formant deuxième portion 48 au contact du cône de serrage 32. Ce maintien en contact du levier permet un desserrage du cône de serrage 32 rapide et immédiat, dès le début de la sollicitation du levier par l'utilisateur.

Lorsque le dispositif de maintien 20 est maintenu en position le long du mât 80, le sous-ensemble orientable comportant le mécanisme de desserrage 40 peut être pivoté autour de l'axe 84 du mât 80. Dans les modes de réalisation illustrés ici, le pivotement du sous ensemble orientable supplémentaire, comportant le boîtier 50 et relié au portant, entraîne le pivotement du sous ensemble orientable comportant le mécanisme 40 du fait de l'émergence de la deuxième portion 48 du mécanisme 40 au travers des fenêtres 58 du boîtier 50. Les boutons 74 d'actionnement du mécanisme 40 disposés sur le portant et sont donc solidaires du mouvement du mécanisme 40. L'orientation du portant ou de la charge 72 autour du mât 80 entraîne l'orientation du mécanisme 40 et des boutons 74 qui sont associés l'un avec l'autre, l'utilisateur peut ainsi toujours actionner le mécanisme 40 sans être gêné par le portant ou de la charge 72.

Les bagues 52 et 56 formant paliers limitent le débattement du sous ensemble orientable supplémentaire dans les directions radiales relativement à l'axe 84 du mât 80. La limitation du débattement radial permet d'assurer la stabilité du positionnement du moyeu autour du mât 80. Cette stabilité du moyeu autour du mât 80 est particulièrement utile lorsque le moyeu supporte une charge déportée de l'axe 84 du mât 80. L'augmentation de la distance entre les paliers 52 et 56 améliore la stabilité du moyeu. Dans une telle perspective, les pivots 52 et 56 formant paliers sont de préférence disposés aux deux extrémités opposées du dispositif 20 selon l'axe 84 du mât 80.

De par le maintien en position par frottement en adhérence, le dispositif de maintien 20 proposé permet le maintien sur le mât 80 de diamètre constant. Le mât 80 présentant un diamètre constant correspond à un mât lisse. La faculté de maintien en position le long d'un tel mât lisse 80 permet le réglage de la charge portée à n'importe quelle position le long du mât 80. Ainsi le réglage de la position le long du mât est avantageusement continu.

Bien entendu, la présente invention n'est pas limitée aux exemples et au mode de réalisation décrits et représentés, mais elle est susceptible de nombreuses variantes accessibles à l'homme de l'art.

## Revendications

1. Dispositif de maintien en position réglable le long d'un mât et orientable par pivotement autour de l'axe du mât lorsque le dispositif (20) est maintenu en position le long au mât, comprenant :
- un sous-ensemble de fixation sur le mât comportant un frein (26) pour le maintien en position du dispositif (20) le long du mât par frottement en adhérence du frein (26) sur le mât et un organe de serrage (32) du frein (26) en adhérence sur le mât ;
- au moins un sous-ensemble orientable par pivotement autour de l'axe du mât lorsque le dispositif de maintien (20) est maintenu en position le long du mât par frottement en adhérence du frein (26) sur le mât ; le sous-ensemble orientable étant monté pivotant par rapport au sous-ensemble de fixation et comprenant un mécanisme (40) de desserrage de l'organe de serrage (32) du frein (26) sur le mât pour le réglage de la position du dispositif le long du mât.

2. Dispositif selon la revendication 1, dans lequel l'organe de serrage (32) est susceptible de venir en contact avec le frein (26) pour serrer le frein (26) en adhérence sur le mât, le mécanisme (40) de desserrage s'étendant entre l'organe de serrage (32) et le frein (26) pour que l'actionnement du mécanisme (40) de desserrage diminue la sollicitation de l'organe de serrage (32) sur le frein (26).

3. Dispositif selon la revendication 1 ou 2, dans lequel le mécanisme (40) de desserrage comprend une première portion (42) en contact avec le frein (26) et une deuxième portion (48) en contact avec l'organe de serrage (32), la première portion (42) étant articulée en rotation par rapport à la deuxième portion (48) pour diminuer la sollicitation de l'organe de serrage (32) sur le frein (26), le mécanisme de desserrage étant de préférence actionné par un effort radial par rapport à la direction d'extension du mât.

4. Dispositif selon l'une des revendications 1 à 3, dans lequel l'organe de serrage (32) est précontraint en serrage du frein (26) en adhérence sur le mât, le mécanisme (40) de desserrage étant prévu pour que l'actionnement du mécanisme (40) de desserrage s'oppose à la précontrainte en serrage du frein (26).

5. Dispositif selon la revendication 4, comportant une partie élastique (60) telle qu'un ressort de compression pour réaliser la précontrainte en serrage de l'organe de serrage (32).

6. Dispositif selon la revendication 5, comportant une partie plus rigide (50) que la partie élastique (60), la partie plus rigide (50) formant boîtier duquel émerge au moins en partie le mécanisme (40) de desserrage pour permettre l'actionnement manuel du mécanisme (40) depuis l'extérieur du boîtier (50) et le boîtier maintenant la partie élastique (60) en déformation géométrique pour précontraindre en serrage l'organe de serrage (32).

7. Dispositif selon l'une des revendications 1 à 6, dans lequel le mécanisme de desserrage (40) est à actionnement manuel, de préférence à l'aide d'une seule main.

8. Dispositif selon l'une des revendications 1 à 7, dans lequel :
- le frein (26) est une douille élastique fendue destinée à être traversée par le mât, la douille élastique comportant une zone formant mors (28) susceptible d'adhérer au mât par frottement,
- l'organe de serrage (32) est une portion de cône creux, tronqué logeant la zone formant mors (28) du frein (26) pour serrer le frein sur le mât par l'organe de serrage (32), par coopération de formes entre la portion de cône et la zone formant mors (28).

9. Dispositif selon l'une des revendications 1 à 8, comprenant un moyeu monté pivotant par rapport au sous ensemble de fixation, le moyeu étant orientable par pivotement autour de l'axe du mât lorsque le dispositif (20) est maintenu en position le long du mât.

10. Dispositif selon la revendication 9, dans lequel le moyeu forme boîtier (50) du dispositif duquel émerge au moins en partie le mécanisme (40) de desserrage pour permettre l'actionnement manuel du mécanisme (40) depuis l'extérieur du boîtier (50).

11. Support pour le maintien en position réglable le long d'un mât et l'orientation d'une charge par rapport à ce mât, le support comportant :
- un dispositif (20) de maintien en position le long du mât selon la revendication 9 ou 10, et
- un portant solidaire du moyeu du dispositif de maintien, le portant étant destiné à porter la charge.

12. Support selon la revendication 11, dans lequel le portant est un bras articulé (70).

13. Support selon la revendication 11 ou 12, dont la charge que le portant est destiné à porter est du mobilier de bureau, de préférence un écran d'affichage pour ordinateur.

14. Ensemble prêt à monter ou assemblé, comprenant :
- un mât (80) ; et
- un support selon l'une des revendications 11 à 13 ou d'un dispositif de maintien selon l'une des revendications 1 à 10, le dispositif de maintien étant destiné à être maintenu en position le long du mât par frottement en adhérence du frein (26) sur le mât (80).

15. Ensemble selon la revendication 14, dans lequel le diamètre du mât (80) est constant.
